# EUROPÄISCHE PATENTSCHRIFT

(11) **EP 3 450 074 B1**
(45) Veröffentlichungstag und Bekanntmachung des Hinweises auf die Patenterteilung: **20.10.2021**
(21) Anmeldenummer: 18187109.6
(22) Anmeldetag: 02.08.2018
(51) Int. Cl.: B23D 55/04

(54) **BANDSÄGEMASCHINE**
BAND SAW MACHINE
MACHINE À SCIE À RUBAN

(30) Priorität: 31.08.2017 DE 102017120087
(43) Veröffentlichungstag der Anmeldung: 06.03.2019
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE)
(74) Vertreter: Lemcke, Brommer & Partner Patentanwälte Partnerschaft mbB

(56) Entgegenhaltungen:
- EP-A2- 0 443 122
- EP-B1- 0 443 122
- CN-B- 103 286 381
- US-A- 3 764 126
- US-A- 4 922 777
- US-A1- 2013 112 054
- US-A1- 2014 216 219

## Beschreibung

Die vorliegende Erfindung betrifft eine Bandsägemaschine zum Sägen von metallischen Werkstücken nach dem Oberbegriff des Anspruchs 1 sowie ein Verfahren zum Trennen von im Metall-3D-Druck-Verfahren hergestellten Metallteilen von einer Grundplatte nach dem Oberbegriff des Anspruchs 11. Eine solche Bandsägemaschine gemäß dem Oberbegriff des Anspruchs 1 und ein Verfahren gemäß dem Oberbegriff des Anspruchs 11 ist in US 2014/216219 A1 offenbart.

Eine Bandsägemaschine der vorliegenden Art umfasst demnach ein Sägenunterteil und ein Sägenoberteil, wobei das Sägenoberteil normalerweise beweglich am Sägenunterteil angebracht ist, für Spezialanwendungen jedoch auch unbeweglich an diesem befestigt sein kann. Das Sägenoberteil ist normalerweise oberhalb des Sägenunterteils angeordnet und kann, soweit es beweglich angebracht ist, geradlinig oder in einer Schwenkbewegung auf das Sägenunterteil abgesenkt und von diesem angehoben werden. Die Erfindung ist allerdings nicht darauf beschränkt, dass das Sägenoberteil oberhalb des Sägenunterteils angeordnet ist.

Im Sägenoberteil sind mindestens zwei Laufräder gelagert, von denen mindestens eines angetrieben ist. Um die Laufräder ist ein Sägeband gelegt, das mit einer Schnittbewegung um die Laufräder umläuft. Der Antrieb des Sägebands für die Schnittbewegung erfolgt über das angetriebene Laufrad. Zwischen zwei Laufrädern ist im Sägenoberteil ein Schneidbereich vorgesehen, durch den das Sägeband mit seiner Schnittbewegung durchläuft, und in dem das zu sägende metallische Werkstück gesägt wird. Hierfür wird üblicherweise das Sägeband bzw. in der Regel das gesamte Sägenoberteil mit einer Sägevorschubbewegung, deren Richtung von der Richtung der Schnittbewegung abweicht und in der Regel in etwa senkrecht zu dieser steht, gegen das Werkstück bewegt. Alternativ oder zusätzlich kann das Werkstück gegen das Sägeband bewegt werden, wodurch die Sägevorschubbewegung ebenfalls bewirkt werden kann.

Am Sägenunterteil einer Bandsägemaschine der vorliegenden Art ist eine Zuführeinrichtung zum Zuführen der Werkstücke angebracht. Mit dieser werden die Werkstücke zum Schneidbereich des Sägebands und/oder in eine Sägeebene transportiert, in der der Schneidbereich des Sägebands zum Ausführen der Sägevorschubbewegung verschiebbar ist.

Im Allgemeinen erfolgt das Zuführen des Werkstücks im Stand der Technik in die Sägeebene, wobei die Zuführbewegung in etwa senkrecht zur Sägevorschubbewegung und gleichzeitig in etwa senkrecht zur Schnittbewegung erfolgt, d.h. das Werkstück wird mit der Zuführeinrichtung in die Sägeebene geschoben und dann das Sägenoberteil mit dem umlaufenden Sägeband auf das Werkstück abgesenkt, so dass das Sägeband, das im Schneidbereich innerhalb der Sägeebene geführt wird, in das Werkstück eindringt und dieses durchsägt. Um das Werkstück exakt zu positionieren und für den Sägevorgang zu fixieren, weist die Zuführeinrichtung eine Halterung zum lösbaren Befestigten des Werkstücks auf, die üblicherweise aus beweglichen Klemmbacken besteht. Diese Halterung ist insbesondere deswegen beweglich, um das Werkstück nach einem vollendeten Sägeschnitt so weit zu verlagern, üblicherweise vorzuschieben, dass ein erneuter Sägeschnitt durchgeführt werden kann. Eine solche Bandsägemaschine ist beispielsweise aus der DE 10 2013 210 573 A1 bekannt.

Bandsägemaschinen der vorliegenden Art eignen sich zum Sägen von unterschiedlichsten Metallteilen. Üblicherweise wird Langmaterial gesägt, also Stangen, Rohre, Profile, einzeln oder in Bündeln, die der Bandsägemaschine in der Regel auf Rollenbahnen zugeführt und auf einem Sägetisch, der die Oberseite des Sägenunterteils bildet, für den Trennschnitt positioniert werden.

Eine relativ neue Anwendung ist das Trennen von Metallteilen, die im Metall-3D-Druck-Verfahren hergestellt worden sind, von der Grundplatte, auf der diese Metallteile "gedruckt" worden sind, zum Beispiel im Lasersinterverfahren. Solche Grundplatten haben typische Abmessungen von 200 x 200 mm² bis 400 x 400 mm², und die darauf hergestellten Metallteile sind typischerweise bis zu 200 mm bzw. 400 mm hoch. Der eigentliche 3D-Druck erfolgt durch schichtweises Aufschmelzen von Metallpulver auf der Grundplatte, in der Regel punkt- oder zeilenweise. Hierbei entsteht das Problem, dass die Metallteile, die Schicht für Schicht auf der Grundplatte aufwachsen, im Ergebnis fest mit der Grundplatte verschweißt sind. Um sie von der Grundplatte zu lösen, werden in jüngerer Zeit auch Bandsägemaschinen der vorliegenden Art eingesetzt.

Um Metallteile, die im Metall-3D-Druck-Verfahren hergestellt sind, von ihrer Grundplatte mit einer Bandsägemaschine zu trennen, wie sie beispielsweise aus der DE 10 2013 210 573 A1 bekannt ist, muss die Grundplatte in die als Spannbacken ausgeführte bewegliche Halterung der Zuführeinrichtung eingespannt werden, und zwar so, dass die Grundplatte exakt vertikal orientiert ist bzw. in einer zur Sägeebene exakt parallelen Ebene. Die darauf hergestellten Metallteile erstrecken sich dann in horizontaler Richtung bzw. senkrecht zur Sägeebene. Wenn die Grundplatte von den Spannbacken bis an die Sägeebene herangeschoben wurde, wird der erforderliche Sägeschnitt durch Absenken des Sägenoberteils durchgeführt, indem das Sägeband entlang der Oberseite der Grundplatte, auf der die Metallteile gedruckt wurden, geführt wird. Mit diesem Sägeschnitt werden die Metallteile von der Grundplatte getrennt.

Problematisch ist hierbei jedoch, dass die Grundplatte sehr exakt zur Sägeebene ausgerichtet werden muss, um nicht versehentlich entweder in die Grundplatte oder in die Metallteile zu sägen; denn hierdurch würde das Ergebnis des 3D-Drucks zerstört und Ausschuss produziert. Eine typische Grundplatte wiegt allerdings um die 30 kg und weist mit darauf gedruckten Metallteilen einen Schwerpunkt auf, der für die exakte Ausrichtung in Spannbacken sehr ungünstig ist. Mit einer herkömmlichen Bandsägemaschine ist es daher schwierig, eine exakte Ausrichtung der Grundplatte und hierdurch einen exakten Trennschnitt zu gewährleisten.

Darüber hinaus ist es üblich, dass auf einer Grundplatte nicht nur ein Metallteil, sondern gleichzeitig mehrere Metallteile gedruckt werden, die demzufolge mit einem einzigen Sägevorgang von der Grundplatte abgetrennt werden. Wird nun die Grundplatte in einer herkömmlichen Bandsägemaschine in vertikaler Orientierung eingespannt und der Sägeschnitt mit einer vertikalen Sägeebene durchgeführt, fallen die zuerst von der Grundplatte getrennten Metallteile nach unten auf diejenigen Metallteile, die noch nicht von der Grundplatte getrennt sind. Dies birgt die Gefahr von Beschädigungen vor allem dann, wenn Metallteile mit komplizierten und fragilen Strukturen von der Grundplatte getrennt werden sollen, deren Herstellung durch das 3D-Druck-Verfahren überhaupt erst ermöglicht worden sind und für die das Metall-3D-Druck-Verfahren vornehmlich verwendet wird. Ferner besteht die Gefahr, dass das Sägeband verklemmt, wenn abgesägte Metallteile nicht herunterfallen, sondern nur gegen andere, noch nicht abgesägte Metallteile kippen.

Der vorliegenden Erfindung liegt daher die Aufgabe zugrunde, eine Bandsägemaschine der eingangs genannten Art so zu modifizieren, dass sie insbesondere besser als bisher zum Trennen von im Metall-3D-Druck-Verfahren hergestellten Metallteilen von der Grundplatte geeignet ist. Der vorliegenden Erfindung liegt ferner die Aufgabe zugrunde, ein Verfahren zum Trennen von im Metall-3D-Druck-Verfahren hergestellten Metallteilen von der Grundplatte vorzuschlagen, das die oben angeführten Probleme vermeidet.

Gelöst ist diese Aufgabe durch eine Bandsägemaschine mit den Merkmalen des Anspruchs 1 sowie durch ein Verfahren mit den Merkmalen des Anspruchs12. Bevorzugte Ausgestaltungen der erfindungsgemäßen Bandsägemaschine finden sich in den Ansprüchen 2 bis11; eine vorteilhafte Weiterbildung des erfindungsgemäßen Verfahrens ist im Anspruch 13niedergelegt.

Die erfindungsgemäße Bandsägemaschine ist demnach größtenteils konventionell ausgestaltet, nämlich mit einem Sägenunterteil, einem daran (beweglich oder unbeweglich) angebrachten Sägenoberteil (das oberhalb des Sägenunterteils angeordnet sein kann aber nicht muss), mindestens zwei im Sägenoberteil gelagerten Laufrädern, von denen mindestens eines angetrieben ist, einem mit einer Schnittbewegung um die Laufräder umlaufenden und durch einen Schneidbereich durchlaufenden Sägeband, und einer am Sägenunterteil angebrachten Zuführeinrichtung zum Zuführen der Werkstücke in den Schneidbereich des Sägebands und/oder in eine Sägeebene, in der der Schneidbereich des Sägebands zum Ausführen einer Sägevorschubbewegung verschiebbar ist.

Wie an sich bekannt, weist die Zuführeinrichtung der erfindungsgemäßen Bandsägemaschine eine bewegliche Halterung zum lösbaren Befestigen des Werkstücks auf. Jedoch ist diese bewegliche Halterung, die herkömmlicherweise durch Spannbacken gebildet wird, erfindungsgemäß an die beabsichtigte Verwendung der Bandsägemaschine angepasst: Sie ist solcherart ausgebildet, dass sie ein daran befestigtes Werkstück - von einer Ausgangsposition ausgehend, in der das Werkstück lösbar an der Halterung angebracht wird, beispielsweise mit Klammern oder Spannvorrichtungen, bevorzugt jedoch mittels Schraubverbindungen - sowohl mit einer Translationsbewegung als auch mit einer Rotationsbewegung zum Schneidbereich des Sägebands und/oder zur Sägeebene bewegt. Die Translationsbewegung und die Rotationsbewegung können hierbei hintereinander ausgeführt werden, oder aber mit einer entsprechend überlagerten Bewegung.

Die Rotationsbewegung der beweglichen Halterung, die das Werkstück letztlich in die Position bringt, in der es gesägt wird, ermöglicht es, dass eine Grundplatte mit Metallteilen, die im Metall-3D-Druck-Verfahren auf der Grundplatte hergestellt worden sind, beim Anbringen an die Halterung nicht mehr exakt in einer Ebene ausgerichtet werden muss, die in der Sägeebene bzw. parallel zur Sägeebene orientiert ist. Vielmehr ist es beispielsweise möglich, die Grundplatte mit den darauf befindlichen Metallteilen - beispielsweise mit Kran-Unterstützung - auf eine Halterung aufzusetzen, die in ihrer Ausgangsposition einen ebenen Tisch bildet. Das Werkstück ist so nicht nur besonders einfach auf die Halterung aufzusetzen, sondern auch besonders einfach an dieser lösbar zu befestigen. Durch die Rotationsbewegung bringt die Halterung sodann die Grundplatte in eine Orientierung, in der sie exakt parallel zur Schneidebene ausgerichtet ist oder exakt in der Schneidebene liegt.

Je nachdem, ob das Sägeband der erfindungsgemäßen Bandsägemaschine in herkömmlicher Art und Weise durch Absenken oder Verschwenken des Sägenoberteils in der Schneidebene bewegt wird, um die Sägevorschubbewegung durchzuführen, oder ob das Sägeband beim Sägevorgang ortsfest bleibt (und nur die Schnittbewegung durchführt), während das Werkstück innerhalb der durch die Orientierung des Sägebands definierten Sägeebene gegen das Sägeband bewegt wird und solcherart die Sägevorschubbewegung bewirkt, sorgt die Translationsbewegung der erfindungsgemäßen Halterung dafür, dass die Grundplatte, genauer die Oberseite der Grundplatte, auf der die Metallteile aufgedruckt worden sind, exakt in der Schnittebene zu liegen kommt, oder aber zumindest eine Komponente der Translationsbewegung sorgt für die Sägevorschubbewegung, wenn eine solche nicht vom Sägeband durchgeführt wird. Im Rahmen der vorliegenden Erfindung sind auch Mischformen dieser grundsätzlichen Prinzipen vorstellbar.

Mit der erfindungsgemäßen Rotationsbewegung der Halterung kann auch der zweite Hauptnachteil des Standes der Technik beim Sägen von im Metall-3D-Druck-Verfahren hergestellten Werkstücken, bestehend aus Metallteilen und einer Grundplatte, beseitigt werden: Wenn mehrere Metallteile auf der Grundplatte aufgedruckt sind, die in einem Sägevorgang nacheinander abgesägt werden, und hierbei die Gefahr besteht, dass bereits abgesägte Metallteile auf noch nicht abgesägte Metallteile kippen und Störungen oder Beschädigungen verursachen, kann die Halterung so ausgestaltet werden, dass sie mittels der Rotationsbewegung das Werkstück gleichsam umdreht, d.h. es dem Schneidbereich des Sägebands bzw. der Sägeebene solcherart orientiert zuführt, dass die Metallteile nach unten orientiert auf der Grundplatte sitzen, wobei die Grundplatte hierbei vorzugsweise horizontal orientiert ist. Metallteile, die bereits abgesägt sind, fallen somit aufgrund der Schwerkraft nach unten, ohne in Kontakt mit noch nicht abgesägten Metallteilen zu kommen, wodurch etwaige Beschädigungen und Störungen des Sägevorgangs ausgeschlossen sind.

Um die exakte Ausrichtung des Werkstücks, insbesondere einer Grundplatte mit aufgedruckten Metallteilen sicherzustellen, sind bevorzugt Festanschläge zur Begrenzung der Rotationsbewegung der translativ und rotativ bewegbaren Halterung vorgesehen. Hierdurch wird auch sichergestellt, dass beim Anbringen des Werkstücks an der Halterung keine besondere Sorgfalt von Nöten ist, um etwa die Halterung nicht unbeabsichtigterweise zu verkippen. Zusätzlich kann die Halterung selbstverständlich auch mit Festanschlägen für die Translationsbewegung ausgestattet sein.

Erfindungsgemäß ist die Halterung der Zuführeinrichtung translatorisch gegen den Schneidbereich des Sägebands bewegbar und führt hierdurch die Sägevorschubbewegung aus. Dies ermöglicht, dass das Sägenoberteil während des Sägeschnitts unbewegt bleibt. Gerade beim Sägen von Werkstücken, die im Metall-3D-Druck-Verfahren hergestellt worden sind, und die durch die erfindungsgemäße Rotationsbewegung der bewegbaren Halterung der Zuführeinrichtung nicht auf eine vertikale Sägeebene angewiesen sind, ergeben sich Vorteile, wenn das Sägenoberteil für die Sägevorschubbewegung nicht bewegt werden muss. Denn dann kann man auf die bei bekannten Bandsägemaschinen übliche Verdrehung des Sägebands vor und nach dem Schneidbereich verzichten und das Sägeband in der insbesondere horizontalen Orientierung, in der es um die Laufräder umläuft, belassen. Hierdurch wird das Sägeband im Betrieb weit weniger belastet, als wenn es in die Sägeebene verdreht werden muss, und die Standzeit des Sägebandes erhöht sich signifikant.

Das Sägeband verläuft im Schneidbereich erfindungsgemäß im Wesentlichen horizontal orientiert, und die Halterung der Zuführeinrichtung ist vor dem Ausführen der Sägevorschubbewegung um eine ebenfalls im Wesentlichen horizontale Drehachse drehbar, und zwar vorzugsweise um 180 Winkelgrade. Letzteres bietet deswegen Vorteile, weil das Werkstück, insbesondere die Grundplatte mit aufgedruckten Metallteilen, dann in der Ausgangsposition der Halterung einfach von oben auf diese aufgesetzt werden kann.

Die bei Bandsägemaschinen der vorliegenden Art normalerweise vorhandene vertikale Beweglichkeit des Sägenoberteils kann hierbei dazu verwendet werden, die Höhe des Sägeschnitts zu justieren. Dies ist schon deswegen vorteilhaft, weil Grundplatten für den Metall-3D-Druck mehrfach verwendet werden. Hierzu wird deren Oberfläche, auf der die Metallteile aufgedruckt werden, vor einem erneuten Druck abgeschliffen, wodurch sich die Materialstärke der Grundplatte jeweils leicht verringert. Ohne die Halterung und deren Bewegungsweg verändern zu müssen, der vorzugsweise mit Festanschlägen begrenzt ist, kann die erfindungsgemäße Bandsägemaschine in dieser bevorzugten Ausgestaltung dann an unterschiedliche Grundplattenstärken angepasst werden, indem das Sägenoberteil entsprechend nachjustiert wird.

Diese bevorzugte Ausgestaltung der erfindungsgemäßen Bandsägemaschine ist nicht auf exakt horizontale und vertikale Richtungen eingeschränkt; das Sägeband kann vielmehr auch in einem Winkel zur Horizontalen orientiert sein, so dass sich die Sägeebene entsprechend ändert und die Translationsbewegung der Halterung, mit der die Sägevorschubbewegung ausgeführt wird, ebenfalls in einem entsprechenden Winkel zur Horizontalen verläuft, um in der Sägeebene zu bleiben.

Wenn die erfindungsgemäß bewegbare Halterung zur Aufnahme einer Grundplatte eines im Metall-3D-Druck-Verfahren hergestellten Werkstücks mit auf der Grundplatte gedruckten Metallteilen vorgesehen und insbesondere im Wesentlichen als Tisch ausgebildet ist, ist es bevorzugt, wenn die Halterung einen Drehtisch aufweist, der auf einem im Wesentlichen horizontal verfahrbaren Schlitten gelagert ist. Dieser Schlitten ist für die Translationsbewegung zuständig, während der Drehtisch die Rotationsbewegung ausführt. Eine solche Ausgestaltung der Halterung ermöglicht insbesondere auf einfache Weise, die bevorzugten Festanschläge vorzusehen.

Mit einem weiteren Aspekt der vorliegenden Erfindung wird ein weiteres Problem gelöst, das sich beim Sägen von Werkstücken ergibt, die im Metall-3D-Druck-Verfahren hergestellt worden sind:
Beim Metall-3D-Druck, insbesondere beim Lasersintern, werden die Metallteile, die auf die Grundplatte gedruckt werden sollen, durch punktuelles und schichtweises Schmelzen von Metallpulver hergestellt, das zuvor auf die Grundplatte aufgebracht wurde. 3D-Druck-Verfahren werden vornehmlich zur Herstellung von Metallteilen eingesetzt, die ungewöhnliche Formen aufweisen, welche mit herkömmlichen Fertigungsverfahren nicht einstückig hergestellt werden können, insbesondere weil sie Hinterschneidungen aufweisen. Je nach Form und Ausmaß der Hinterschneidungen ergeben sich Hohlräume zwischen der Grundplatte und den aufgedruckten Metallteilen, die durch das Trennen der Metallteile von der Grundplatte geöffnet werden. Hierbei wird das noch darin befindliche, nicht aufgeschmolzene Metallpulver freigesetzt. Entsprechende Effekte sind zu beobachten, wenn Metallteile mit Stützstrukturen im 3D-Druck-Verfahren auf der Grundplatte hergestellt werden. Auch solche Stützstrukturen werden beim Sägen geöffnet, und darin noch befindliches Metallpulver wird freigesetzt.

Die für das Metall-3D-Druck-Verfahren verwendeten Metallpulver weisen eine typische Partikelgröße von 40 µm auf. Daraus ergibt sich das große Problem einer Gesundheitsgefährdung von Bedienpersonen, denn Metallpartikel mit diesen Abmessungen können eingeatmet werden, sind jedoch zu klein, als dass sie von den Lungenhärchen wieder aus der Lunge herausgefördert werden können. Es ist daher an sich unverzichtbar, beim Trennen von gedruckten Metallteilen von ihrer Grundplatte staubdichte Schutzanzüge mit separater Atemluftversorgung für die Bedienpersonen vorzusehen.

Zur Lösung dieser Problematik wird im Rahmen der vorliegenden Erfindung vorgeschlagen, die erfindungsgemäße Bandsägemaschine, also das Sägenoberteil und das Sägenunterteil mitsamt der Zuführeinrichtung mit einem vorzugsweise staubdicht zu schließenden Gehäuse und/oder mit einer solchen Verkleidung zu versehen. Zusätzlich kann mindestens eine Absaugeinrichtung für das Innere des Gehäuses und/oder der Verkleidung vorgesehen sein, die zweckmäßigerweise so nahe wie möglich am Schneidbereich angeordnet ist und etwaige Stäube am Ort der Freisetzung absaugt.

Insbesondere bei der bevorzugten Ausgestaltung der erfindungsgemäßen Bandsägemaschine mit im Wesentlichen feststehenden Sägenoberteil kann eine solche Kapselung der gesamten Bandsägemaschine unaufwändig durchgeführt werden. Auch die bevorzugte bzw. beabsichtigte Verwendung der Bandsägemaschine zum Trennen von im Metall-3D-Druck-Verfahren hergestellten Metallteilen von ihrer Grundplatte kommt einer Kapselung einer Bandsägemaschine entgegen, da es sich dann bei den zu sägenden Werkstücken nicht um Langgut handelt, das beispielsweise über eine Rollenbahn zugeführt werden muss, sondern eine Einzelstück-Zuführung der Werkstücke die Regel ist, die zudem vergleichsweise kompakte Abmessungen aufweisen, typischerweise nicht mehr als ein Würfel mit 400 - 500 mm Kantenlänge.

Vor allem bei der beabsichtigten Verwendung der erfindungsgemäßen Bandsägemaschine für 3D-gedruckte Werkstücke ist es bevorzugt, das staubdicht zu schließende Gehäuse und/oder die entsprechende Verkleidung mit Türen und/oder Klappen zu versehen, die ein Einlegen und/oder Entnehmen von Werkstücken oder Werkstückteilen mit Hilfe eines Krans ermöglichen.

Ein Ausführungsbeispiel für eine erfindungsgemäß ausgestaltete Bandsägemaschine, deren bestimmungsgemäßer Betrieb auch ein Ausführungsbeispiel für ein erfindungsgemäßes Verfahren ist, wird im Folgenden anhand der beigefügten Zeichnungen näher beschrieben und erläutert. Es zeigen:
- Figur 1: eine schematische Darstellung einer Bandsägemaschine nach dem Stand der Technik;
- Figur 2: eine erfindungsgemäß ausgestaltete Bandsägemaschine in isometrischer Darstellung;
- Figuren 3 bis 8: die Bandsägemaschine aus Figur 2 zu unterschiedlichen Zeitpunkten eines Sägevorgangs.

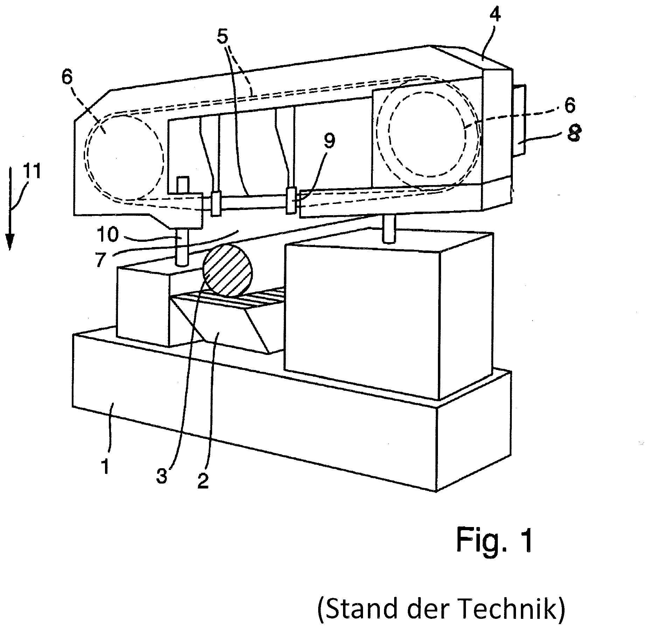

In Figur 1 ist eine Bandsägemaschine schematisch dargestellt, wie sie an sich aus dem Stand der Technik bekannt ist. Sie umfasst ein Sägenunterteil 1 mit einem darauf angebrachten Sägetisch 2 für ein zu sägendes Werkstück 3, sowie ein gegenüber dem Sägenunterteil 1 bewegliches Sägenoberteil 4, in dem ein Sägeband 5 endlos um zwei Laufräder 6 umläuft. Mittels eines Motors 8 wird eines der beiden Laufräder 6 angetrieben, so dass das Sägeband 5 eine umlaufende Schnittbewegung ausführt.

In einem Schneidbereich 7 ist das Sägeband 5 vertikal orientiert, so dass es in einer Sägeebene liegt. Hierzu wird es am Anfang und am Ende des Schneidbereichs 7 mittels zweier Bandführungen 9 um 90° gedreht, da es ansonsten in horizontaler Orientierung um die Laufräder 6 umläuft. Das Sägenoberteil 4 ist mittels Säulenführungen 10 beweglich am Sägenunterteil 1 angebracht, und durch ein Absenken des Sägenoberteils 4 verschiebt sich der Schneidbereich 7 des Sägebands 5 vertikal nach unten, um eine Sägevorschubbewegung 11 auszuführen. Die Ebene, innerhalb der sich der Schneidbereich 7 des Sägebands 5 in der Sägevorschubbewegung 11 bewegt, ist die Sägeebene.

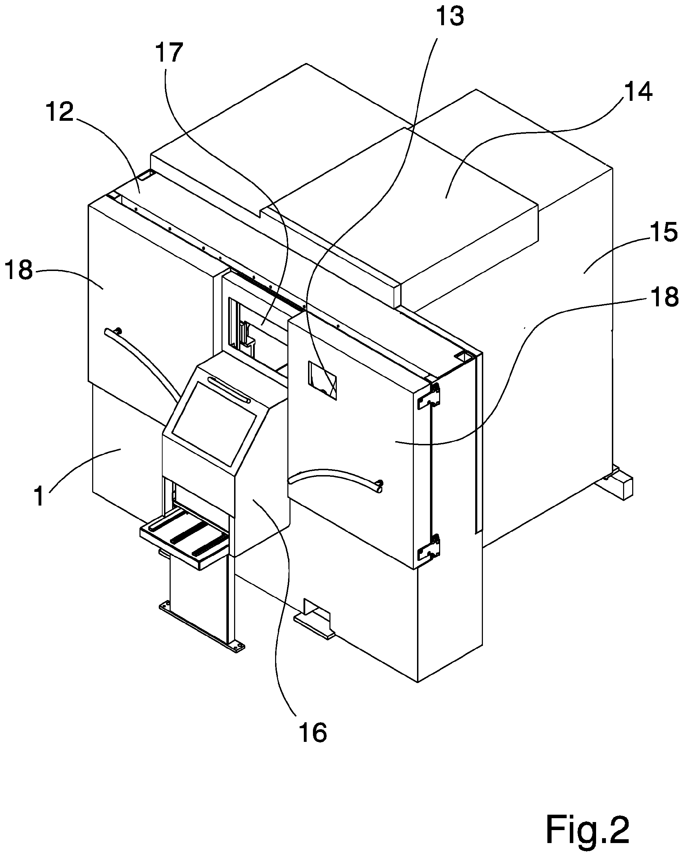

Figur 2 zeigt eine isometrische Ansicht einer erfindungsgemäß ausgestalteten Bandsägemaschine, wobei diese rundum mit einem Gehäuse 12 staubdicht gekapselt ist. Ein Bedienfeld 13 sorgt für eine Bedienbarkeit der Bandsägemaschine von außerhalb des Gehäuses 12.

Die im Inneren der hier dargestellten Bandsägemaschine befindlichen Elemente entsprechen größtenteils den in Figur 1 dargestellten Elementen, wobei allerdings eine Drehung des Sägebands 5 im Schneidbereich 7 entfällt. Das Sägeband 5 behält im Schneidbereich 7 vielmehr seine horizontale Orientierung bei, und die Sägevorschubbewegung wird nicht durch Absenken des Sägenoberteils 4 bewirkt, sondern durch eine Translationsbewegung des Werkstücks 3, weswegen auch der Sägetisch 2 entfallen ist.

Die in Figur 2 dargestellte Bandsägemaschine wird über ein Schiebedach 14 und eine Seitentür 15 beschickt, und die gesägten Werkstückteile werden nach vorne über eine Klappe 16 entnommen. Ein Sichtfenster 17 ermöglicht eine Vor-Ort-Überwachung, und frontseitig sind zwei Fronttüren 18 vorgesehen, um die Maschine warten zu können.

Die in Figur 2 verdeutlichte Kapselung der Bandsägemaschine verhindert, dass gesundheitsschädliche Metallstäube in die Umgebung gelangen. Zusätzlich sind an den Bandführungen 9 Absaugungen vorgesehen (nicht dargestellt), um etwa beim Sägen freigesetzte Metallstäube direkt abzusaugen.

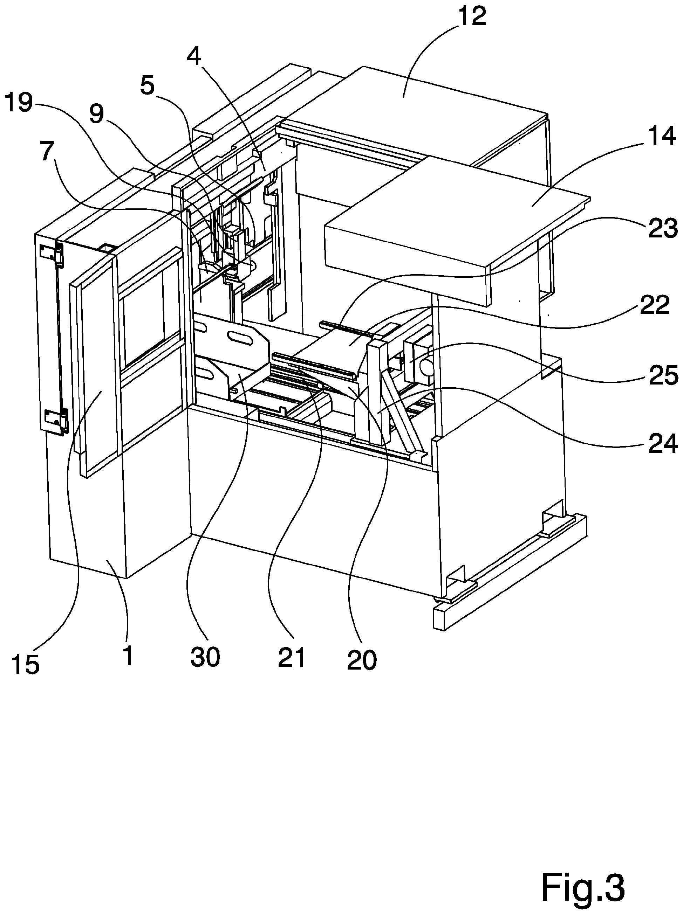

Die Figuren 3 bis 7 zeigen die Bandsägemaschine aus Figur 2 in einer anderen Ansicht, wobei zum Beschicken der Bandsägemaschine die Seitentür 15 und das Schiebedach 14 geöffnet sind und den Blick auf eine Zuführeinrichtung freigeben.

In Figur 3 sind darüber hinaus das Sägenunterteil 1 und das Sägenoberteil 4 erkennbar. Ebenso lässt sich das Sägeband 5 erkennen, das hier durch den Schneidbereich 7 läuft, dessen eines Ende von einer hier sichtbaren Bandführung 9 markiert wird. Diese Bandführung 9 ist mit einer Absaugung 19 versehen. Die Bandführung 9 dreht das Sägeband 5 nicht in eine vertikale Orientierung; vielmehr verbleibt dieses in einer horizontalen Orientierung, so dass es keine Sägevorschubbewegung durchführt, sondern durch eine Auf- und Abbewegung des Sägenoberteils 4 lediglich die horizontale Lage der Sägeebene justiert werden kann. Die Laufräder mitsamt Motor sind hier im Gehäuse 12 nicht zu erkennen.

Die Zuführeinrichtung besteht im vorliegenden Ausführungsbeispiel aus einer beweglichen Halterung 20 und zwei Schienen 21, welche ortsfest am Sägenunterteil 1 angebracht sind. Die Halterung 20 ihrerseits umfasst einen Drehtisch 22 mit zwei Gewindereihen 23, der um eine horizontale Achse drehbar an einem Schlitten 24 befestigt ist. Der Schlitten 24 ist entlang der Schienen 21 vor und zurück bewegbar, so dass er die Sägevorschubbewegung zum Sägeband 5 hin bewirken kann. Die Drehung des Drehtischs 22 am Schlitten 24 wird motorisch durch eine Dreheinrichtung 25 bewirkt, und die Drehbewegung wird durch Festanschläge begrenzt.

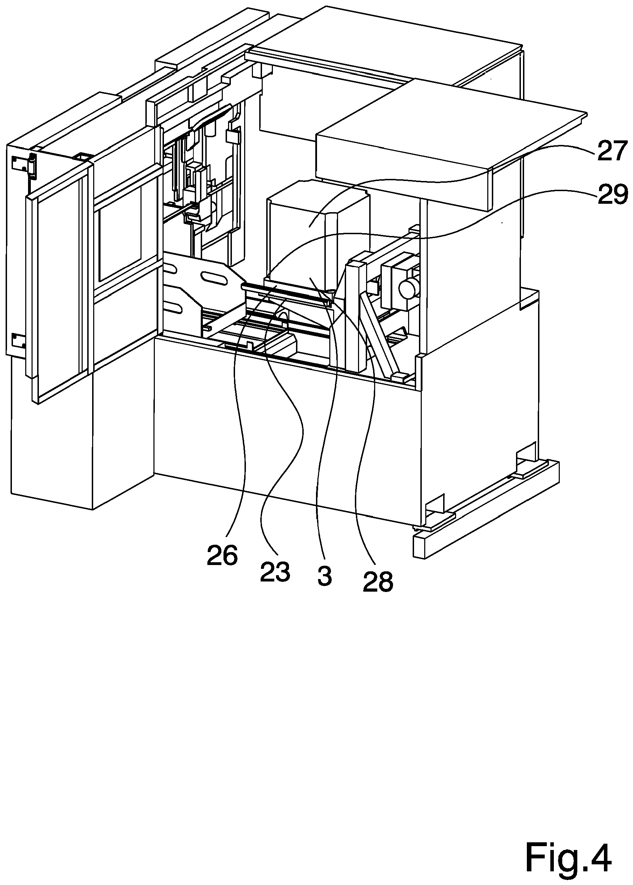

Die Figuren 4 bis 7 zeigen, in einer Darstellung entsprechend Figur 3, verschiedene Zeitpunkte beim Sägen eines Werkstücks 3, das aus einer Grundplatte 26 und im Metall-3D-Druck-Verfahren darauf hergestellten und mit der Grundplatte 26 verschweißten, hier nur symbolisch dargestellten Metallteilen 27 besteht. Die Oberseite 28 der Grundplatte 26, auf der die Metallteile 27 gedruckt worden sind und entlang der gesägt werden soll, ist durch eine dunkle Linie angedeutet. Das aus Grundplatte 26 und Metallteilen 27 bestehende Werkstück 3 ist mittels Kranunterstützung auf den Drehtisch 22 aufgesetzt worden.

Die Grundplatte 26 ist in ihren Ecken mit Schrauben 29 versehen, die in die Gewindereihe 23 eingeschraubt werden können, um die Grundplatte 26 auf dem Drehtisch 22 zu befestigen. Somit ist das Werkstück 3 lösbar an der Halterung 20 befestigt.

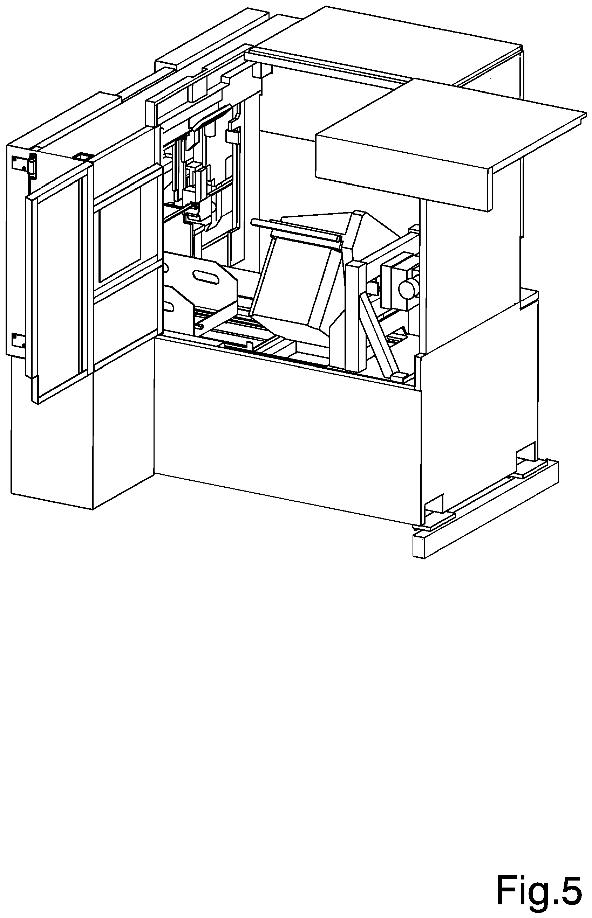

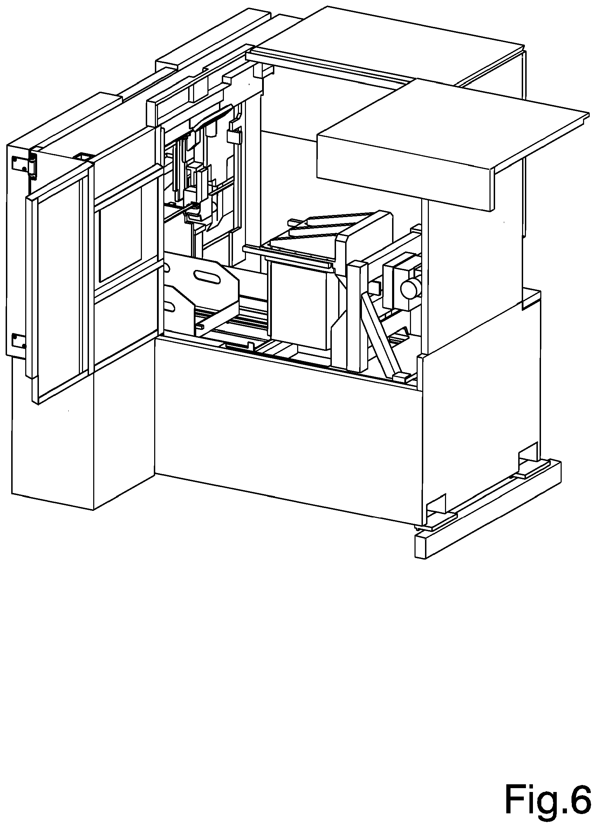

Durch eine Drehung des Drehtischs 22, wie sie in Figur 5 dargestellt ist, wird das Werkstück 3 in eine Position gebracht, in der die Grundplatte 26 horizontal ausgerichtet ist und exakt in der Sägeebene liegt, die durch die Orientierung des Sägebands 5 im Schneidbereich 7 definiert ist, und in der die Metallteile 27 nach unten orientiert an der Grundplatte 26 hängen (Figur 6).

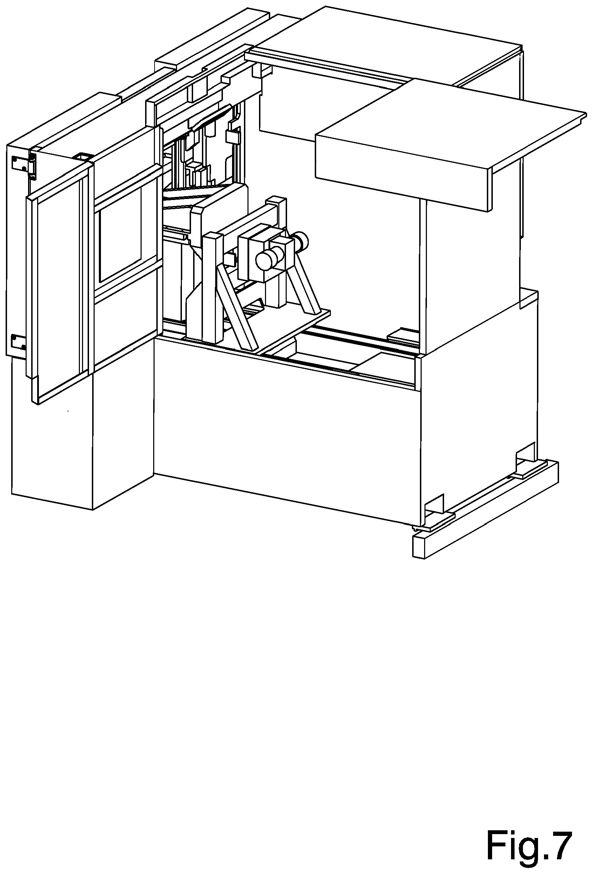

Nach dieser Rotationsbewegung erfolgt eine Translationsbewegung der Halterung 20, indem der Schlitten 24 entlang der Schienen 21 gegen das Sägeband 5 nach vorne bewegt wird. Diesen Vorgang zeigt Figur 7. Hierbei dringt das Sägeband 5 im Schneidbereich 7 in das Werkstück 3 ein und trennt die Grundplatte 26 entlang der Oberseite 28 von den Metallteilen 27.

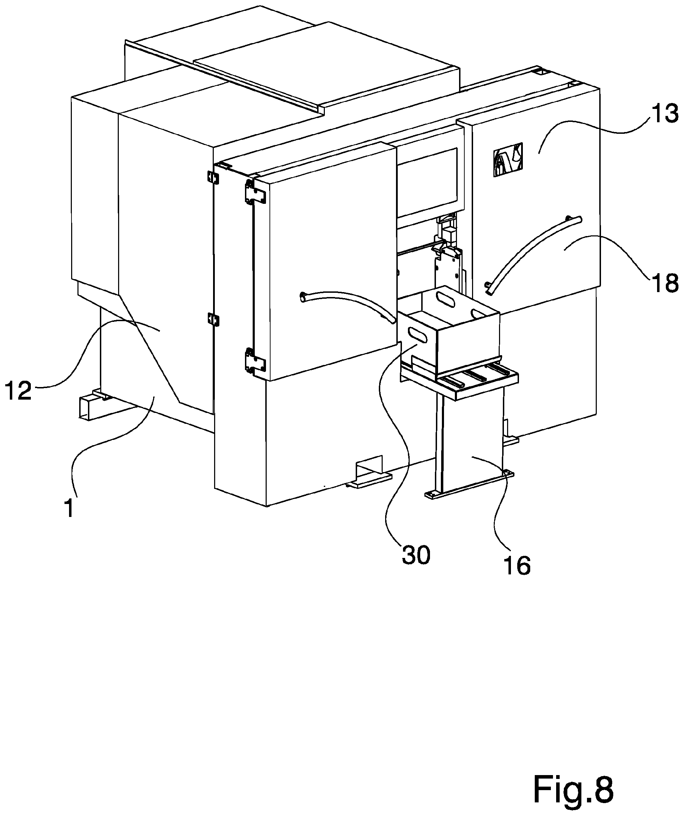

Die abgesägten Metallteile fallen nach unten in eine Auffangschale 30, die in den Figuren 3 bis 6 sowie insbesondere in Figur 8 sichtbar ist. Figur 8 zeigt das vorliegende Ausführungsbeispiel einer erfindungsgemäßen Bandsägemaschine wiederum von vorne, und zwar nach Beendigung des Sägevorgangs. Die Klappe 16 ist geöffnet worden und die Auffangschale 30 wurde auf der Klappe 16 aus dem Gehäuse 12 nach vorne herausgezogen. In der Auffangschale 30 liegen die abgesägten Metallteile 27, von wo sie entnommen oder mitsamt der Auffangschale 30 wegtransportiert werden können.

Die Grundplatte 26 verbleibt naturgemäß an der Halterung 20 und wird mit dieser zusammen wieder zurückgefahren, so dass sie nach Öffnen der Seitentür 15 von der Gewindereihe 23 des Drehtischs 22 gelöst und zur Wiederverwendung entnommen werden kann.

Der besondere Vorteil des in den Figuren dargestellten Ausführungsbeispiels liegt darin, dass eine herkömmliche Bandsägemaschine nach dem Stand der Technik mit relativ wenigen Modifikationen, die im Wesentlichen nur die Zuführeinrichtung betreffen, erfindungsgemäß ausgestaltet wurde - wodurch sich große Vorteile beim Sägen von Werkstücken ergeben, die im Metall-3D-Druck-Verfahren hergestellt worden sind. Denn wie bereits oben beschrieben, werden durch die erfindungsgemäße Ausgestaltung der Bandsägemaschine die Probleme beseitigt, die beim Sägen von solchen Werkstücken mit konventionellen Bandsägemaschinen auftreten.

## Patentansprüche

1. Bandsägemaschine zum Sägen von metallischen Werkstücken, mit einem Sägenunterteil (1), einem daran angebrachten Sägenoberteil (4), mindestens zwei im Sägenoberteil (4) gelagerten Laufrädern (6), von denen mindestens eines angetrieben ist, einem mit einer Schnittbewegung um die Laufräder (6) umlaufenden und durch einen Schneidbereich (7) durchlaufenden Sägeband (5), und einer am Sägenunterteil (1) angebrachten Zuführeinrichtung zum Zuführen der Werkstücke (3) zum Schneidbereich (7) des Sägebands (5) und/oder in eine Sägeebene, in der der Schneidbereich (7) des Sägebands (5) zum Ausführen einer Sägevorschubbewegung (11) verschiebbar ist, wobei die Zuführeinrichtung eine bewegliche Halterung (20) zum lösbaren Befestigen des Werkstücks (3) aufweist, wobei die Halterung (20) der Zuführeinrichtung, von einer Ausgangsposition ausgehend, sowohl mit einer Translationsbewegung als auch mit einer Rotationsbewegung zum Schneidbereich (7) des Sägebands (5) und/oder zur Sägeebene bewegbar ist, und wobei die Halterung (20) der Zuführeinrichtung vor dem Ausführen der Sägevorschubbewegung um eine im wesentlichen horizontale Drehachse drehbar ist, und wobei das Sägeband (5) im Wesentlichen in der gleichen Orientierung durch den Schneidbereich (7) läuft, in der es um die Laufräder (6) umläuft, **dadurch gekennzeichnet,**
**dass** das Sägeband (5) im Schneidbereich (7) im Wesentlichen horizontal orientiert verläuft und dass die Halterung (20) der Zuführeinrichtung translatorisch gegen den Schneidbereich (7) des Sägebands (5) bewegbar ist, um die Sägevorschubbewegung auszuführen.

2. Bandsägemaschine nach Anspruch 1, wobei die Zuführeinrichtung mit Festanschlägen zur Begrenzung der Rotationsbewegung der Halterung (20) versehen ist.

3. Bandsägemaschine nach einem der Ansprüche 1 oder 2, wobei die Halterung (20) der Zuführeinrichtung in der Ausgangsposition nach oben orientiert ist, um ein Werkstück von oben auf oder in die Halterung (20) zu setzen, und wobei die Halterung (20) vor dem Ausführen der Sägevorschubbewegung solcherart um eine im wesentlichen horizontale Drehachse drehbar ist, dass die Halterung (20) bei der Sägevorschubbewegung nach unten orientiert ist.

4. Bandsägemaschine nach mindestens einem der Ansprüche 1 bis 3, wobei das Sägenoberteil (4) zum Justieren der Position des Schnitts im Werkstück (3) relativ zum Sägenunterteil (1) bewegbar ist.

5. Bandsägemaschine nach mindestens einem der Ansprüche 1 bis 4, wobei die Halterung (20) in der Ausgangsposition von oben mit einem Werkstück (3) bestückbar ist.

6. Bandsägemaschine nach Anspruch 5, wobei die Halterung (20) zur Aufnahme einer Grundplatte (26) eines im Metall-3D-Druck-Verfahren hergestellten Werkstücks (3) mit auf der Grundplatte (26) gedruckten Metallteilen (27) vorgesehen und insbesondere zumindest zum Teil im Wesentlichen als Tisch ausgebildet ist.

7. Bandsägemaschine nach Anspruch 6, wobei die Halterung (20) einen Drehtisch (22) enthält, der auf einem im Wesentlichen horizontal verfahrbaren Schlitten (24) gelagert ist.

8. Bandsägemaschine nach mindestens einem der Ansprüche 1 bis 7, wobei das Sägenoberteil (4) und das Sägenunterteil (1) mitsamt der Zuführeinrichtung mit einem vorzugsweise staubdicht zu schließenden Gehäuse (12) und/oder mit einer solchen Verkleidung versehen sind.

9. Bandsägemaschine nach Anspruch 8, wobei mindestens eine Absaugeinrichtung (19) für das Innere des Gehäuses (12) und/oder der Verkleidung vorgesehen ist.

10. Bandsägemaschine nach einem der Ansprüche 8 oder 9, wobei das Gehäuse (12) und/oder die Verkleidung mit Türen (15) und/oder Klappen (16) versehen ist, die ein Einlegen und/oder Entnehmen von Werkstücken (3) oder Werkstückteilen mit Hilfe eines Krans ermöglichen.

11. Verfahren zum Trennen von im Metall-3D-Druck-Verfahren hergestellten Metallteilen (27) von einer Grundplatte (26), auf deren Oberseite (28) die Metallteile (27) gedruckt wurden, mittels einer Bandsägemaschine nach mindestens einem der Ansprüche 1 bis 10, wobei die Grundplatte (26) lösbar an der beweglichen Halterung (20) der Zuführeinrichtung befestigt und die Halterung (20) so an den Schneidbereich (7) des Sägebands (5) und/oder in die Sägeebene bewegt wird, dass die Sägeebene entlang der Oberseite (28) der Grundplatte (26) verläuft, **dadurch gekennzeichnet, dass** die Grundplatte (26) im Wesentlichen von oben auf oder in die Halterung (20) gesetzt und an dieser befestigt wird, und die Halterung (20) dann sowohl mit einer Translationsbewegung als auch mit einer Rotationsbewegung zum Schneidbereich (7) des Sägebands (5) und/oder zur Sägeebene bewegt wird, so dass die Grundplatte (26) beim Sägevorgang vertikal oder solcherart gehalten wird, dass ihre Oberseite (28) nach unten orientiert ist.

12. Verfahren nach Anspruch 11, wobei die Halterung (20) mit der Grundplatte (26) durch die Rotationsbewegung um 180 Winkelgrade gedreht und durch die Translationsbewegung so weitgehend gegen den Schneidbereich (7) des Sägebands (5) bewegt wird, dass hieraus die Sägevorschubbewegung resultiert.

## Claims

1. Band saw machine for sawing metallic workpieces, comprising a lower saw part (1), an upper saw part (4) attached to the lower saw part, at least two running wheels (6) which are mounted in the upper saw part (4) and of which at least one is driven, a saw band (5) which revolves with a cutting motion around the running wheels (6) and passes through a cutting region (7), and a feed device which is attached to the lower saw part (1) for feeding the workpieces (3) to the cutting region (7) of the saw band (5) and/or into a sawing plane in which the cutting region (7) of the saw band (5) is displaceable to carry out a saw advance motion (11), whereby the feed device includes a movable holder (20) for releasably fastening the workpiece (3), whereby the holder (20) of the feed device, starting from an initial position, is movable both with a translational motion and also with a rotational motion to the cutting region (7) of the saw band (5) or the sawing plane, and whereby the holder (20) of the feed device is rotatable about a substantially horizontal axis of rotation before the saw advance motion is carried out, and whereby the saw band (5) runs through the cutting region (7) in substantially the same orientation in which it revolves around the running wheels (6),
**characterised in**
**that** the saw band (5) runs with a substantially horizontal orientation in the cutting region (7), and in that the holder (20) of the feed device is movable translationally against the cutting region (7) of the saw band (5) in order to carry out the saw advance motion.

2. Band saw machine according to claim 1, whereby the feed device is provided with fixed stops to limit the rotational motion of the holder (20).

3. Band saw machine according to any of claims 1 or 2, whereby the holder (20) of the feed device in the initial position is oriented upwards, in order to place the workpiece onto or into the holder (20) from above, and whereby before the saw advance motion is carried out the holder (20) is rotatable about a substantially horizontal axis of rotation in such a way that the holder (20) is oriented downwards during the saw advance motion.

4. Band saw machine according to at least one of claims 1 to 3, whereby the upper saw part (4) is movable relative to the lower saw part (1) in order to adjust the position of the cut in the workpiece (3).

5. Band saw machine according to at least one of claims 1 to 4, whereby the holder (20) in the initial position is adapted to be loaded from above with a workpiece (3).

6. Band saw machine according to claim 5, whereby the holder (20) is provided to receive a base plate (26) of a workpiece (3) which is produced by a metal 3D printing process and provided with metal parts (27) printed on the base plate (26), and the holder is designed, at least in part, substantially as a table.

7. Band saw machine according to claim 2, whereby the holder (20) has a rotary table (22) which is mounted on a substantially horizontally movable slide (24).

8. Band saw machine according to at least one of claims 1 to 7, whereby the upper saw part (4) and the lower saw part (1) together with the feed device are provided with a housing (12) which is preferably to be closed in a dust-tight manner and/or such a covering.

9. Band saw machine according to claim 8, whereby at least one extractor (19) is provided for an interior of the housing (12) and/or the covering.

10. Band saw machine according to any of claims 8 or 9, whereby the housing (12) and/or the covering is provided with doors (15) and/or flaps (16) which enable the insertion and/or removal of workpieces (3) or workpiece parts by means of a crane.

11. Method for separating metal parts (27), produced by a metal 3D printing process, from a base plate (26), on the upper side (28) of which the metal parts (27) have been printed, by means of a band saw machine according to at least one of claims 1 to 10, whereby the base plate (26) is releasably fastened to the movable holder (20) of the feed device, and the holder (20) is moved onto the cutting region (7) of the saw band (5) and/or into the sawing plane such that the sawing plane runs along the upper side (28) of the base plate (26),
**characterised in**
**that** the base plate (26) is placed, substantially from above, onto or into the holder (20) and is fastened thereto, and the holder (20) is then moved both with a translational motion and also with a rotational motion to the cutting region (7) of the saw band (5) and/or to the sawing plane such that, during the sawing operation, the base plate (26) is held vertically or in such a manner that the upper side (28) is oriented downwards.

12. Method according to claim 11, whereby the holder (20) with the base plate (26) is rotated by 180° by the rotational motion, and is moved by the translational motion against the cutting region (7) of the saw band (5) to such an extent that the saw advance motion results therefrom.

## Revendications

1. Machine à scie à ruban pour le sciage de pièces métalliques, avec une partie inférieure de scie (1), une partie supérieure de scie (4) placée sur celle-ci, au moins deux roues porteuses (6) montées dans la partie supérieure de scie (4), dont au moins une est entraînée, un ruban de scie (5) tournant avec un mouvement de coupe autour des roues porteuses (6) et traversant une zone de coupe (7), et un dispositif d'avance placé sur la partie inférieure de scie (1) pour avancer les pièces (3) vers la zone de coupe (7) du ruban de scie (5) et/ou dans un plan de sciage, dans lequel la zone de coupe (7) du ruban de scie (5) peut être déplacée pour réaliser un mouvement d'avance de scie (11), dans laquelle le dispositif d'avance présente un support mobile (20) pour la fixation amovible de la pièce (3), dans laquelle le support (20) du dispositif d'avance, partant d'une position initiale, peut être déplacé aussi bien avec un mouvement de translation qu'avec un mouvement de rotation vers la zone de coupe (7) du ruban de scie (5) et/ou vers le plan de sciage, et dans laquelle le support (20) du dispositif d'avance peut tourner autour d'un axe de rotation sensiblement horizontal avant que le mouvement d'avance de la scie ne soit effectué, et dans laquelle le ruban de scie (5) traverse la zone de coupe (7) dans sensiblement la même orientation dans laquelle il tourne autour des roues porteuses (6),
**caractérisée en ce**
**que** le ruban de scie (5) se déplace sensiblement horizontalement dans la zone de coupe (7) et que le support (20) du dispositif d'avance est mobile en translation contre la zone de coupe (7) du ruban de scie (5) pour effectuer le mouvement d'avance de scie.

2. Machine à scie à ruban selon la revendication 1, dans laquelle le dispositif d'avance est doté de butées fixes pour limiter le mouvement de rotation du support (20).

3. Machine à scie à ruban selon l'une quelconque des revendications 1 ou 2, dans laquelle le support (20) du dispositif d'avance est orienté vers le haut dans la position initiale pour placer une pièce par le haut sur ou dans le support (20), et dans laquelle le support (20) est mobile en rotation autour d'un axe de rotation sensiblement horizontal avant de réaliser le mouvement d'avance de scie, de sorte que le support (20) est orienté vers le bas pendant le mouvement d'avance de scie.

4. Machine à scie à ruban selon au moins l'une quelconque des revendications 1 à 3, dans laquelle la partie supérieure de scie (4) est mobile par rapport à la partie inférieure de scie (1) pour ajuster la position de la coupe dans la pièce (3).

5. Machine à scie à ruban selon au moins l'une quelconque des revendications 1 à 4, dans laquelle le support (20) peut être chargé avec une pièce (3) par le haut dans la position initiale.

6. Machine à scie à ruban selon la revendication 5, dans laquelle le support (20) est prévu pour recevoir une plaque de base (26) d'une pièce (3) fabriquée par le procédé d'impression 3D métallique avec des pièces métalliques (27) imprimées sur la plaque de base (26) et, en particulier, est conçu au moins en partie sensiblement en tant que table.

7. Machine à scie à ruban selon la revendication 6, dans laquelle le support (20) contient une table rotative (22) qui est montée sur un chariot (24) qui peut être déplacé sensiblement horizontalement.

8. Machine à scie à ruban selon au moins l'une quelconque des revendications 1 à 7, dans laquelle la partie supérieure de scie (4) et la partie inférieure de scie (1) ainsi que le dispositif d'avance sont dotés d'un boîtier (12) à fermer de préférence de manière étanche à la poussière et/ou avec un tel habillage.

9. Machine à scie à ruban selon la revendication 8, dans laquelle au moins un dispositif d'aspiration (19) est prévu pour l'intérieur du boîtier (12) et/ou de l'habillage.

10. Machine à scie à ruban selon l'une quelconque des revendications 8 ou 9, dans laquelle le boîtier (12) et/ou l'habillage est doté de portes (15) et/ou de volets (16) qui permettent d'introduire et/ou de retirer des pièces (3) ou des parties de pièces à l'aide d'une grue.

11. Procédé pour séparer des pièces métalliques (27) produites par le procédé d'impression 3D métallique d'une plaque de base (26), sur le côté supérieur (28) de laquelle les pièces métalliques (27) ont été imprimées, au moyen d'une scie à ruban selon au moins l'une quelconque des revendications 1 à 10, dans lequel la plaque de base (26) est fixée de manière amovible au support mobile (20) du dispositif d'avance et le support (20) est déplacé vers la zone de coupe (7) du ruban de scie (5) et/ou dans le plan de sciage de sorte que le plan de sciage s'étend le long du côté supérieur (28) de la plaque de base (26),
**caractérisé en ce**
**que** la plaque de base (26) est placée sur ou dans le support (20) sensiblement par le haut et est fixée à celui-ci, et le support (20) est ensuite déplacé aussi bien avec un mouvement de translation qu'avec un mouvement de rotation vers la zone de coupe (7) du ruban de scie (5) et/ou vers le plan de sciage, de sorte que la plaque de base (26) est maintenue verticalement pendant l'opération de sciage ou de sorte que son côté supérieur (28) est orienté vers le bas.

12. Procédé selon la revendication 11, dans lequel le support (20) avec la plaque de base (26) est tourné de 180 degrés angulaires par le mouvement de rotation et est déplacé par le mouvement de translation contre la zone de coupe (7) du ruban de scie (5) dans une mesure telle que le mouvement d'avance de scie en résulte.
